# EUROPEAN PATENT SPECIFICATION

(11) **EP 1 411 342 B1**
(45) Date of publication and mention of the grant of the patent: **13.12.2006**
(21) Application number: 02292518.4
(22) Date of filing: 11.10.2002
(51) Int. Cl.: G01N 15/06, G01N 1/22

(54) **Method of evaluating a particle concentration in an atmosphere of a clean-room or a mini-environment**
Verfahren zur Bestimmung einer Partikelkonzentration in der Atmosphäre eines Reinraums oder einer Mini-Umgebung
Procédé d'évaluation de la concentration de particules dans l'atmosphère d'une salle blanche ou d'un mini-environnement

(43) Date of publication of application: 21.04.2004
(73) Proprietor: S.O.I. Tec Silicon on Insulator Technologies S.A., 38190 Bernin (FR)
(72) Inventor: Maleville, Christophe, 38660 La Terrasse (FR)
(74) Representative: Grünecker, Kinkeldey, Stockmair & Schwanhäusser Anwaltssozietät

(56) References cited:
- US-A- 3 526 461
- US-A- 4 725 294
- US-A- 5 804 494

## Description

The present invention relates to a method for evaluating a particle concentration, such as a surface contamination or a atomic contamination especially of boron or phosphor, in an atmosphere of a clean room or a machine mini-environment.

A clean room is a work area with controlled temperature, humidity and particle concentration to protect sensitive equipment or products from contamination. Many different industries such as medical facilities or integrated circuit manufacturers require the use of clean rooms with a high quality.

Therefore, the clean rooms are equipped with various very expensive and complicated air supply cleaning systems providing the clean rooms with dust-free filtered air.

Nevertheless, due to a leakage in the system and due to the consistence of the air filters, a certain amount of boron and phosphor remains in or is added to the clean room atmosphere which can lead to a contamination of wafers. For instance, the contamination of boron or phosphor on a surface of a processed silicon wafer can amount to 10¹² atoms per cm². These particles can diffuse during thermal treatment into the silicon wafer surface leading to a change of the dopant concentration in this region affecting the characteristic of the processed chips. Therefore, it is necessary to know the particle concentration of the clean room.

In a conventional technology for monitoring boron or phosphor in a clean room environment, air of the clean room is lead through a liquid wherein a part of the boron or phosphor of the formed air bubbles dissolves in the liquid. After a relatively long period of time, e.g. a day, the liquid has picked up an amount of boron or phosphor which is high enough for analysing. Then the boron or phosphor content of the liquid is evaluated by a spectroscopy based analysis such as Atomic Spectroscopy or ICPMS.

This method reflects only in a relatively imprecise way the real boron or phosphor concentration of the air, because only an indefinite part of the actual boron or phosphor content is solved in the liquid since most of the air including boron or phosphor escapes with the bubbles from the liquid before dissolving. It is a further disadvantage that this method has to be applied over a relatively long period of time in which only a mean value of the boron or phosphor of the clean room can be evaluated.

US 3,526,461 describes a method in which dust particles are absorbed on a plate with a very flat top surface and then illuminated with a beam of light directed across said surface, parallel thereto. The light is then reflected by the dust particles and collected by sensitive photoelectric cells arranged above the surface.

US 5,804,494 describes a method of fabricating bonded wafers. The authors of US 5,804,494 found that a bonding interface in a bonded wafer contaminated with an excess amount of boron or phosphorous can lead to a reversion of the type of conductivity of the bonded wafer or to a deviation of the resistivity of the bonded wafer from the design value. Therefore, the authors of US 5,804,494 evaluated the boron concentration at the bonding interface and found that there is a relation between the storing time during which the Sl wafers are left in a clean bench before bonding and the boron concentration at the bonding interface. The authors of US 5,804,494 concluded therefrom that the boron concentration problem can be solved as the air and clean bench is completely free of boron.

It is the object of the present invention to provide a method for evaluating a particle concentration in an atmosphere in the clean room reflecting a more real and precise particle concentration of the clean room in a short time.

This object is solved by a method for evaluating a particle concentration in an atmosphere of a clean room comprising the steps of exposing a test surface of a test substrate especially of a silicon wafer to said atmosphere, for a test time, to capture an amount of particles; bonding the test surface that contains the captured particles to a surface of a second substrate after said test time, to avoid loss of particles; analysing the amount of captured particles and comparing the analysed particle amount with a reference particle amount analysed on a reference substrate.

By this method, a certain particle amount on the surface of the test substrate closely corresponding to the particle concentration in the atmosphere of the clean room can be kept and fixed at the test substrate after a definable test time for analysing. This particle amount can show the state of the test substrate of a certain time of contamination of the test substrate. Then, a comparison between the analysed particle amount on the test wafer with that on the reference substrate provides a relative particle concentration in the atmosphere of the clean room in the pre-defined time period. This allows a conclusive determination of the contamination of the atmosphere.

The inventive method can be further used to monitor the particle concentration in the special mini-environment of a machine, such as a boron or phosphor contamination of the test substrate induced for instance by filters in the machine mini-environment.

In an embodiment of the invention, the method further comprises cleaning of the test substrate before exposing the test substrate to said atmosphere. In this cleaning step, a particle concentration on the surface of the test substrate can be removed resulting in a nearly particle free test surface at the time t=0 at the beginning of an exposure of the test substrate to the atmosphere. So, the analysed particle amount directly corresponds to the particle concentration in the atmosphere reflecting the period from the beginning to the end of the exposure of the test substrate of the atmosphere.

According to of the invention, the test surface of the test substrate is bonded to a surface of another substrate after the test time. The other substrate holds the particles which lay on, are absorbed or are migrated into a surface near region of the test substrate, and catches the particles in their actual position after the test time, making it possible to analyse exactly this amount to conclude from this amount to the particle concentration in the atmosphere of the clean room. The other substrate can be of another material than the test substrate.

In an advantageous example of the invention, said other substrate is a further test substrate, especially a silicon wafer, wherein said substrates form a test pair of substrates. Covering of the test substrate with an equal or a similar substrate has the advantage that the substrates have the same or a comparable particle catching behaviour. Furthermore, these substrates can easily be brought together to form a bonded pair of substrates.

According to an advantageous variant of the invention, the step of conserving the particle amount comprises an annealing of the test substrate after catching the particle amount. By this annealing step, the caught particles can diffuse into the test substrate where they are conserved or fixed for a further analysing of the test substrate.

In a variant of the invention, said annealing is performed in a time range between about 1 to 3 hours, preferably in about 2 hours. During this time, the particles can diffuse into the test substrate creating a certain particle distribution in the test substrate which can be analysed to evaluate the caught particle amount. The annealing time of 2 hours allows a particularly favourable penetration depth of the particles.

In a further embodiment of the invention, said annealing is performed at a temperature between 800°C and 1050°C, preferably at 950°C. The diffusion activity of the particles is at this temperature high enough to get a good particle distribution in the test substrate which can be easily analysed. Especially at 950°C, a good relationship between the created particle distribution and the required energy for diffusion is achieved. The upper limitation of temperature at 1050°C prevents a too homogenous distribution of the particles in the substrate and/or a too strong bonding of the substrates.

According to a specific embodiment of the invention, a test pair of substrates bonded to each other at the end of said test time is subsequently separated for analysing. In this way, the test surface which was exposed to the atmosphere for the test time and which state was conserved by a bonding step is made accessible for analysing the particle amount which was conserved at the substrate at the end of the test time.

In a further example of the invention, the method further comprises an abrasion of at least one of the back sides of a test pair of substrates bonded to each other. The abrasion of material from a back side of the test pair of substrates allows a stepwise backwards approach to the test surface which is conserved by bonding of the substrates to analyse the particle amount at least at the surface.

According to a further embodiment of the invention, analysing the particle amount comprises evaluating the atomic concentration profile of the test substrate. The atomic concentration profile gives a direct indication of a particle quantity included in and on the test substrate.

In a further advantageous embodiment of the invention, the atomic concentration profile is evaluated by a Secondary Ion Mass Spectroscopy. The Secondary Ion Mass Spectroscopy is a very precise and efficient analysing method for providing the atomic concentration profile of the test substrate.

In a further embodiment of the invention, the atomic concentration profile is evaluated at the test surface of the test substrate. Because the test surface is exposed to the atmosphere of the clean room is its atomic concentration profile reflects well the particle concentration in the atmosphere.

In another preferable embodiment of the invention, the test surface is analysed over a thickness of about 100 to 500 nanometers, preferably 200 nanometers. This thickness gives adequate information about the particle amount in the test substrate. Especially, the analysis thickness of 200nm allows an effective relationship between the expenditure of energy for analysing and the evaluated particle amount over this thickness.

According to another preferable variant of the invention, a series of test substrates is produced in timely intervals, preferably about every 30 minutes. This offers the possibility to monitor the change of the particle concentration in the atmosphere of the clean room or the mini-environment in the given intervals. In particular, the time intervals of every 30 minutes are highly expressive to get an overview of the particle concentration in the atmosphere of the clean room or the mini-environment over this period of time. So it is possible to evaluate a contamination rate in the clean room or the mini-environment.

In yet another preferable embodiment of the invention, the method further comprises cleaning of the reference substrate, preferably together with the test substrate. The cleaned reference substrate represents the state without particles on the substrate at the time t=0 which can easily be compared with the test substrate. When the reference substrate is cleaned together with the test substrate, both substrates have the same starting conditions on their surfaces which makes the results of the following comparison of the substrates more precise.

In a further embodiment of the invention, the method further comprises covering of a reference surface of the reference substrate with a reference surface of another reference substrate. So, the initial or original condition on the reference surface of the reference substrate can be kept for analysing and getting reference values of an initial or original particle amount which can be compared with the particle amount of other test substrates.

According to another preferable embodiment of the invention, the method further comprises an annealing of the reference substrate. In this annealing step, an eventual particle amount on the reference substrate can diffuse into the substrate to conserve this particle amount in a region near the surface of the reference substrate.

In another advantageous variant of the invention, the annealing temperature and the annealing time of the annealing of the reference substrate are equal to an annealing temperature and an annealing time of the test substrate. By using the same annealing temperature and annealing time on the test substrate and on the reference substrate, the measurement results on the substrates can be better compared after analysing of the substrates.

The method according to the invention comprises analysing a particle amount of the reference substrate. This particle amount is compared with the evaluated particle amount of the test substrate.

In an embodiment of the invention, analysing the particle amount comprises evaluating the atomic concentration profile of the reference substrate. This atomic concentration profile can be compared with the test substrate.

In an advantageous variant of the invention, the atomic concentration profile of the reference substrate is evaluated by a Secondary Ion Mass Spectroscopy. This spectroscopy enables a precise evaluation of the particle amount in and on the reference substrate.

In a favourable embodiment of the invention, the atomic concentration profile of the reference substrate is evaluated at a reference surface of the reference substrate. This surface represents the initial or original particle amount on the reference substrate, which is a good indication of the particle amount on the reference substrate at the time t=0, which can be compared with the particle amount analysed on the test substrate.

According to yet a further embodiment, the reference surface of the reference substrate is analysed over a thickness of about 100 to 500 nanometers, preferably of about 200 nanometers.

This thickness corresponds to a preferable thickness for analysing of the test substrate and is therefore well suited for a further comparison between the reference substrate and the test substrate. Especially the thickness of 200 nm allows analysing of the particle amount in a relevant surface near part of the substrate.

An embodiment of the present invention will be described in the following with reference to the accompanying figures, in which
- Figure 1: shows steps of an embodiment of the method for evaluating a boron or a phosphor concentration in an atmosphere of a clean room or a machine mini-environment according to the present invention;
- Figure 2: shows schematically a concentration profile of a bonded test wafer pair; and
- Figure 3: shows schematically SIMS-concentration profiles of a test wafer and a reference wafer.

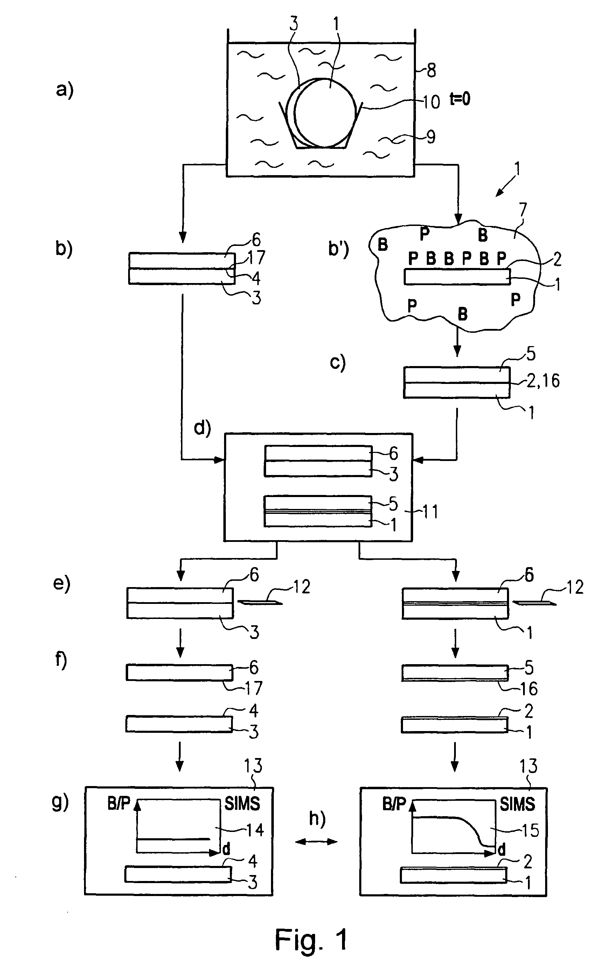

Figure 1 shows steps of an embodiment of the method for evaluating a boron or a phosphor concentration in an atmosphere of a clean room or a machine mini-environment according to the present invention. In the method silicon wafers 1, 3, 5 and 6 are handled. For a boron analysis n-type-silicon and for a phosphor analysis p-type-silicon is used. The substrate level Nₛ which is the bulk dopant concentration of the silicon wafers is lower than the level of the species which are to be analysed.

In step a) of Fig. 1, two or more silicon wafers 1,3 which are shown standing erect or inclined in a wafer holder 10 are dived in a bath 8 containing a cleaning solution 9. The cleaning solution 9 removes inorganic and organic contamination on surfaces 2,4 of the silicon wafers 1,3. As cleaning solution 9, typical RCA cleaning solutions are used which can be complimented or replaced by other suitable solutions or mixtures of gases and solutions which are able to remove any contamination on the surfaces 2,4 of the silicon wafers 1,3. The cleaning solution 9 has a temperature between room temperature of about 19°C to 25°C and about 85°C and can be stirred by a stirrer (not shown) or recirculated to get a homogenous concentration of the components of the cleaning solution.

According to step b) of Fig. 1, reference wafers 3 and 6 are bonded by bringing their cleaned surfaces together immediately after cleaning of the wafers 3,6, and by covering of the surfaces with each other, whereas in step b') of Fig. 1, one of the cleaned silicon test wafers 1 and a further silicon test wafer 5 (not shown) are exposed to an atmosphere 7 of a clean room. The atmosphere 7 contains air which is contaminated with boron or phosphor. A part of the boron or phosphor atoms are adsorbed or deposited on the surface 2 of the silicon wafer 1.

In step c) of Fig. 1, a bonded test wafer pair is formed between the test wafers 1 and 5 by covering the test surface 2 by the other test surface 16 and bonding the test surfaces 2 and 16 of these substrates together. The reference wafer pair 3,6 keeps by this bonding step the initial clean condition of the surface 4 as a reference at its bonding interface, whereas the test wafer pair 1,5 has caught the boron or phosphor contaminants which are deposited on the test surfaces 2,16 of the test wafers 1,5 at the bonding interface of the test wafer pair.

In step d) of Fig. 1, the bonded wafer pairs 3,6 and 1,5 are annealed in an annealing equipment 11 at about 950°C for approximately two hours. In this annealing step, at least the boron or phosphor atoms caught on the bonding interface between the test wafers 1 and 5 diffuse into the regions near the bonding interface of the wafers 1 and 5 and are, thus, conserved.

In step e) of Fig. 1, the bonded wafer pairs 3,6 and 1,5 are separated after annealing with a razor blade 12 which is pushed between the bonded surfaces 4,17 and 2, 16.

Step f) of Fig. 1 shows the wafers in a state after separation wherein at least in a region near the surfaces 2 and 16 of the wafers 1 and 5, the boron or phosphor content is increased due to the diffusion of these particles into the silicon wafers 1,5.

In step g) of Fig.1, the atomic concentration profiles of the wafers 1 and 3 are analysed using a Secondary Ion Mass Spectroscopy (SIMS) device 13. According to a profile 14, measured over about 200 nanometers of the surface beginning from the reference wafer 3, the boron or phosphor concentration at the reference surface 4 of the reference wafer 3 is nearly constant, whereas an atomic concentration profile 15 evaluated at the test surface 2 of the test surface 1 shows especially near the surface an increased concentration of boron or phosphor.

According to step h) of Fig. 1, the atomic concentration profiles 14 and 15 are compared with each other calculating a difference between the profiles. An integration of the profiles between the respective surface and bulk level results in a value for a deposited dose which is commonly expressed in atoms per cm². The calculated difference is a direct indication of the boron or phosphor concentration of the atmosphere in the clean room because there is a direct proportional relationship between the boron or phosphor content of the test wafer and the boron or phosphor contamination of the atmosphere in the clean room.

Although the method shown with reference to Fig. 1 is described for silicon wafers, the method can also be applied to any substrates which are able to catch or conserve particles in an atmosphere. Furthermore, the effect of catching and conserving can be attained in a single method step. In the aforementioned described advantageous embodiment, said effect is realised by subsequently bonding and annealing. It is also conceived that said other substrate which is bonded to said test wafer can be a different material than the test wafer.

Further, the wafers can be annealed at any temperature and in any annealing time making it possible that the particles such as boron or phosphor can be conserved by the used substrates. The annealing time and the resulting diffusion depth of the targeted species or particles are dependent on the annealing temperature and the diffusion coefficients of the respective species. The analysed depth d of the test wafer and of the reference wafer must be higher than the diffusion length of the analysed particles or contaminants. A conventional SIMS-measurement for analysing of the substrates can be replaced by a TOF-SIMS (Time-of-Flight-Secondary Ion Mass Spectroscopy) surface analysis.

Although the method was described with reference to evaluating the boron or phosphor particle concentration in an atmosphere, the method can further be applied for evaluating any other particle concentration or another type of contaminant in an atmosphere.

Instead of the steps e) and f) of Fig. 1, the caught and conserved particle amount can also be made accessible for analysing by an abrasion of at least one of the wafers 1 or 5 shown in Fig. 1 e) of one of their back sides. By a stepwise backwards abrasion of the material of at least one of these wafers, it can be approached to the region of interest in which particles from surfaces 2,16 can be diffused to analyse this region.

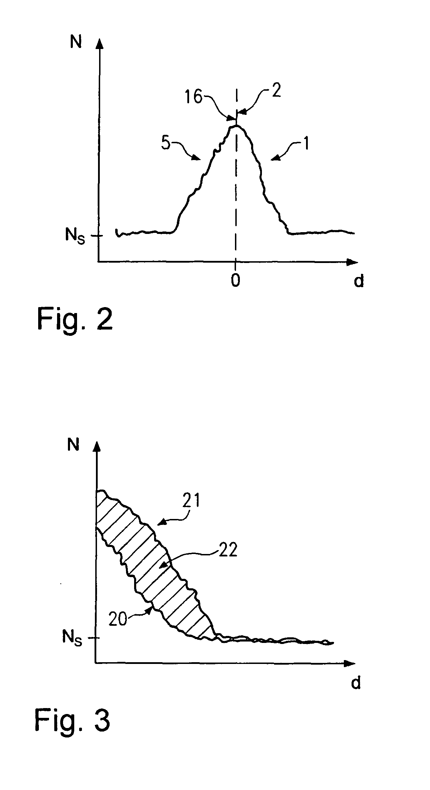

Figure 2 shows schematically a concentration profile of the bonded test wafer pair 1,5 after the annealing step, in which the concentration of diffused contaminants such as boron or phosphor is shown as function of the depth. The depth d=0 corresponds to the respective surfaces 2,16 of the wafers 1,5.

Figure 3 shows schematically a SIMS-concentration profile 21 of the test wafer 1 in comparison to a SIMS-concentration profile 20 of the reference wafer 3, in which the concentration of diffused contaminants is shown as a function of the analysed depth d. The depth d=0 corresponds to the respective surfaces 2,4 of the wafers 1,3. The near surface concentration of the test wafer 1 of the targeted species like boron or phosphor is higher than the near surface concentration of the reference wafer 3. In order to evaluate the surface dose of contaminants, the difference 22 between the test profile 21 and the reference profile 20 is integrated.

## Claims

1. A method for evaluating a particle concentration in an atmosphere (7) of a clean room or a machine mini-environment, comprising the steps of
exposing a test surface (2) of a test substrate (1), especially a silicon wafer, to said atmosphere (7) for a test time (t), to capture an amount of particles;
bonding the test surface (2) that contains the captured particles to a surface (16) of a second substrate (5) after said test time (t), to avoid loss of particles;
analysing the amount of captured particles; and
comparing the analysed particle amount with a reference particle amount from a reference substrate (3) to determine the particle concentration in said atmosphere (7).

2. A method according to claim 1, **characterised in that** the method further comprises cleaning of the test substrate (1) before exposing the test substrate to said atmosphere (7).

3. The method according to one of the preceding claims, **characterised in that** the method further comprises an annealing of the bonded pair of substrates (1, 5).

4. The method according to claim 3, **characterised in that** annealing is performed in a time range between about 1 to about 3 hours, preferably about 2 hours.

5. The method according to one of the claims 3 or 4, **characterised in that** said annealing is performed at a temperature between 800°C and 1050°C, preferably at about 950°C.

6. The method according to one of the preceding claims, **characterised in that** the test pair of substrates (1, 5) bonded to each other at the end of said test time (t) is subsequently separated for analysing.

7. The method according to one of the preceding claims, **characterised in that** the method further comprises an abrasion of at least one of the back sides of the test pair of substrates (1, 5) bonded to each other at the end of the test time (t).

8. The method according to one of the preceding claims, **characterised in that** analysing the particle amount comprises evaluating an atomic concentration profile of the test substrate (1).

9. The method according to claim 8, **characterised in that** the atomic concentration profile is evaluated by a Secondary Ion Mass Spectroscopy (SIMS).

10. The method according to one of the claims 8 or 9, **characterised in that** the atomic concentration profile is evaluated at the test surface (2) of the test substrate (1).

11. The method according to claim 10, **characterised in that** the test surface (2) is analysed over a thickness (d) of about 100 to 500 nanometres, preferably of about 200 nanometres.

12. The method according to one of the preceding claims, **characterised in that** a series of test substrates (1,5) is produced in timely intervals, preferably about every 30 minutes.

13. The method according to one of the preceding claims, **characterised in that** the method further comprises cleaning of the reference substrate (3), preferably together with the test substrate (1).

14. The method according to one of the preceding claims, **characterised in that** the method further comprises covering a reference surface (4) of the reference substrate (3) with the reference surface (17) of another reference substrate (6).

15. The method according to one of the preceding claims, **characterised in that** the method further comprises an annealing of the reference substrate (3).

16. The method according to claim 15, **characterised in that** the annealing temperature and annealing time are equal to an annealing temperature and an annealing time of the test substrate (1).

17. The method according to one of the preceding claims, **characterised in that** analysing the particle amount comprises evaluating an atomic concentration profile of the reference substrate (3).

18. The method according to claim 17, **characterised in that** atomic concentration is evaluated by a Secondary Ion Mass Spectroscopy (SIMS).

19. The method according to one of the claims 17 or 18, **characterised in that** the atomic concentration profile is evaluated at a reference surface (4) of the reference substrate (3).

20. The method according to claim 19, **characterised in that** the reference surface (4) is analysed over a thickness (d) of about 100 to 500 nanometres, preferably of about 200 nanometres.

## Patentansprüche

1. Verfahren zum Ermitteln einer Teilchenkonzentration in einer Atmosphäre (7) eines Reinraums oder eines Maschinen-Mini-Environment, das die folgende Schritte umfasst:
Aussetzen einer Testfläche (2) eines Test-Substrates (1), insbesondere eines Silizium-Wafers, an der Atmosphäre (7) über eine Testzeit (t), um eine Menge an Teilchen einzufangen;
Bonden der Testfläche (2), die eingefangene Teilchen enthält, mit einer Fläche (16) eines zweiten Substrats (5) nach der Testzeit (t), um Verlust von Teilchen zu vermeiden;
Analysieren der Menge eingefangener Teilchen; und
Vergleichen der analysierten Teilchenmenge mit einer Bezugs-Teilchenmenge von einem Bezugs-Substrat (3), um die Teilchenkonzentration in der Atmosphäre (7) zu bestimmen.

2. Verfahren nach Anspruch 1, **dadurch gekennzeichnet, dass** das Verfahren des Weiteren Reinigen des Test-Substrats (1) vor Aussetzen des Test-Substrats an der Atmosphäre (7) umfasst.

3. Verfahren nach einem der vorangegangenen Ansprüche, **dadurch gekennzeichnet, dass** das Verfahren des Weiteren ein Erwärmen des gebondeten Paars von Substraten (1, 5) umfasst.

4. Verfahren nach Anspruch 3, **dadurch gekennzeichnet, dass** das Erwärmen in einem Zeitbereich zwischen ungefähr 1 und ungefähr 3 Stunden, vorzugsweise ungefähr 2 Stunden, durchgeführt wird.

5. Verfahren nach einem der Ansprüche 3 oder 4, **dadurch gekennzeichnet, dass** das Erwärmen bei einer Temperatur zwischen 800° und 1050°, vorzugsweise bei ungefähr 950°, durchgeführt wird.

6. Verfahren nach einem der vorangegangenen Ansprüche, **dadurch gekennzeichnet, dass** das Testpaar von Substraten (1, 5), die am Ende der Testzeit (t) miteinander gebondet werden, anschließend zum Analysieren getrennt wird.

7. Verfahren nach einem der vorangegangenen Ansprüche, **dadurch gekennzeichnet, dass** das Verfahren des Weiteren ein Abschleifen wenigstens einer der Rückseiten des Testpaars von Substraten (1, 5), die miteinander gebondet sind, am Ende der Testzeit (t) umfasst.

8. Verfahren nach einem der vorangegangenen Ansprüche, **dadurch gekennzeichnet, dass** das Analysieren der Teilchenmenge Ermitteln eines Atomkonzentrationsprofils des Test-Substrats (1) umfasst.

9. Verfahren nach Anspruch 8, **dadurch gekennzeichnet, dass** das Atomkonzentrationsprofil mit einer Sekundärionen-Massenspektroskopie (SIMS) ermittelt wird.

10. Verfahren nach einem der Ansprüche 8 oder 9, **dadurch gekennzeichnet, dass** das Atomkonzentrationsprofil an der Testfläche (2) des Test-Substrats (1) ermittelt wird.

11. Verfahren nach Anspruch 10, **dadurch gekennzeichnet, dass** die Testfläche (2) über eine Dicke (d) von ungefähr 100 bis 500 Nanometer, vorzugsweise von ungefähr 200 Nanometer, analysiert wird.

12. Verfahren nach einem der vorangegangenen Ansprüche, **dadurch gekennzeichnet, dass** eine Reihe von Test-Substraten (1, 5) in zeitlichen Intervallen, vorzugsweise ungefähr alle 30 Minuten, erzeugt wird.

13. Verfahren nach einem der vorangegangenen Ansprüche, **dadurch gekennzeichnet, dass** das Verfahren des weiteren Reinigen des Bezugs-Substrats (3), vorzugsweise zusammen mit dem Test-Substrat (1), umfasst.

14. Verfahren nach einem der vorangegangenen Ansprüche, **dadurch gekennzeichnet, dass** das Verfahren des weiteren Abdecken einer Bezugsoberfläche (4) des BezugsSubstrats (3) mit der Bezugsoberfläche (17) eines anderen Bezugs-Substrats (6) umfasst.

15. Verfahren nach einem der vorangegangenen Ansprüche, **dadurch gekennzeichnet, dass** das Verfahren des weiteren ein Erwärmen des Bezugs-Substrats (3) umfasst.

16. Verfahren nach Anspruch 15, **dadurch gekennzeichnet, dass** die Erwärmungstemperatur und die Erwärmungszeit gleich einer Erwärmungstemperatur und einer Erwärmungszeit des Test-Substrats (1) sind.

17. Verfahren nach einem der vorangegangenen Ansprüche, **dadurch gekennzeichnet, dass** Analysieren der Teilchenmenge Ermitteln eines Atomkonzentrationsprofils des Bezugs-Substrats (3) umfasst.

18. Verfahren nach Anspruch 17, **dadurch gekennzeichnet, dass** die Atomkonzentration mit einer Sekundärionen-Massenspektroskopie (SIMS) ermittelt wird.

19. Verfahren nach einem der Ansprüche 17 oder 18, **dadurch gekennzeichnet, dass** das Atomkonzentrationsprofil an einer Bezugsoberfläche (4) des Bezugs-Substrats (3) bewertet wird.

20. Verfahren nach Anspruch 19, **dadurch gekennzeichnet, dass** die Bezugsoberfläche (4) über eine Dicke (d) von ungefähr 100 bis 500 Nanometer, vorzugsweise von ungefähr 200 Nanometer, analysiert wird.

## Revendications

1. Procédé pour évaluer une concentration de particules dans l'atmosphère (7) d'une salle blanche ou d'un mini-environnement de machine, comprenant les étapes consistant à
exposer une surface de test (2) d'un substrat de test (1), en particulier une plaque de silicium, à ladite atmosphère (7) pendant un temps de test (t), pour capturer une quantité de particules ;
lier la surface de test (2) qui contient les particules capturées à une surface (16) d'un second substrat (5) après ledit temps de test (t), pour éviter la perte de particules ;
analyser la quantité de particules capturées ; et
comparer la quantité de particules analysées avec une quantité de particules de référence provenant d'un substrat de référence (3) pour déterminer la concentration de particules dans ladite atmosphère (7).

2. Procédé selon la revendication 1, **caractérisé en ce que** le procédé comprend en outre le nettoyage du substrat de test (1) avant d'exposer le substrat de test à ladite atmosphère (7).

3. Procédé selon l'une des revendications précédentes, **caractérisé en ce que** le procédé comprend en outre un recuit de la paire liée de substrats (1, 5).

4. Procédé selon la revendication 3, **caractérisé en ce que** le recuit est réalisé dans un intervalle de temps entre environ 1 à environ 3 heures, de préférence environ 2 heures.

5. Procédé selon l'une des revendications 3 ou 4, **caractérisé en ce que** ledit recuit est réalisé à une température entre 800 °C et 1050 °C, de préférence à environ 950 °C.

6. Procédé selon l'une des revendications précédentes, **caractérisé en ce que** la paire de substrats de test (1, 5) liés l'un à l'autre à la fin dudit temps de test (t) est ultérieurement séparée pour analyse.

7. Procédé selon l'une des revendications précédentes, **caractérisé en ce que** le procédé comprend en outre une abrasion d'au moins un des côtés arrière de la paire de substrats de test (1, 5) liés l'un à l'autre à la fin de la période de test (t).

8. Procédé selon l'une des revendications précédentes, **caractérisé en ce que** l'analyse de la quantité de particule comprend l'évaluation d'un profil de concentration atomique du substrat de test (1).

9. Procédé selon la revendication 8, **caractérisé en ce que** le profil de concentration atomique est évalué par Spectroscopie de Masse des Ions Secondaires (SIMS).

10. Procédé selon l'une des revendications 8 ou 9, **caractérisé en ce que** le profil de concentration atomique est évalué à la surface de test (2) du substrat de test (1).

11. Procédé selon la revendication 10, **caractérisé en ce que** la surface de test (2) est analysée sur une épaisseur (d) d'environ 100 à 500 nanomètres, de préférence d'environ 200 nanomètres.

12. Procédé selon l'une des revendications précédentes, **caractérisé en ce qu'**une série de substrats de test (1, 5) est produite à des intervalles de temps, de préférence environ toutes les 30 minutes.

13. Procédé selon l'une des revendications précédentes, **caractérisé en ce que** le procédé comprend en outre le nettoyage du substrat de référence (3), de préférence en combinaison avec le substrat de test (1).

14. Procédé selon l'une des revendications précédentes, **caractérisé en ce que** le procédé comprend en outre la couverture d'une surface de référence (4) du substrat de référence (3) par la surface de référence (17) d'un autre substrat de référence (6).

15. Procédé selon l'une des revendications précédentes, **caractérisé en ce que** le procédé comprend en outre un recuit du substrat de référence (3).

16. Procédé selon la revendication 15, **caractérisé en ce que** la température de recuit et la durée de recuit sont égales à la température de recuit et à la durée de recuit du substrat de test (1).

17. Procédé selon l'une des revendications précédentes, **caractérisé en ce que** l'analyse de la quantité de particules comprend l'évaluation d'un profil de concentration atomique du substrat de référence (3).

18. Procédé selon la revendication 17, **caractérisé en ce que** la concentration atomique est évaluée par Spectroscopie de Masse des Ions Secondaires (SIMS).

19. Procédé selon l'une des revendications 17 ou 18, **caractérisé en ce que** le profil de concentration atomique est évalué à une surface de référence (4) du substrat de référence (3).

20. Procédé selon la revendication 19, **caractérisé en ce que** la surface de référence (4) est analysée sur une épaisseur (d) d'environ 100 à 500 nanomètres, de préférence d'environ 200 nanomètres.
